# EUROPÄISCHE PATENTSCHRIFT

(11) **EP 1 424 128 B1**
(45) Veröffentlichungstag und Bekanntmachung des Hinweises auf die Patenterteilung: **31.12.2008**
(21) Anmeldenummer: 02026854.6
(22) Anmeldetag: 01.12.2002
(51) Int. Cl.: B01J 35/02, B01J 29/40, C07C 1/20, B01J 35/10, B01J 37/00, C10G 11/05

(54) **Verwendung eines Katalysators auf der Basis von kristallinem Alumosilicat**
Use of a catalyst based on crystalline aluminosilicate
Utilisation d'un catalyseur à base d'un aluminosilicate cristallin

(43) Veröffentlichungstag der Anmeldung: 02.06.2004
(73) Patentinhaber: SÜD-CHEMIE AG, 80333 München (DE)
(72) Erfinder: Burgfels, Götz, Dr., 83043 Bad Aibling (DE); Kochloefl, Karl, Dr., 83026 Rosenheim (DE); Ladebeck, Jürgen, Dr., Louisville, KY 40232 (US); Schneider, Michael, Dr., 85521 Ottobrunn (DE); Schmidt, Friedrich, Dr., 83024 Rosenheim (DE); Wernicke, Hans-Jürgen, Dr., 82515 Wolfratshausen (DE); Schönlinner, Josef, 83119 Obing (DE)
(74) Vertreter: Splanemann Reitzner Baronetzky Westendorp

(56) Entgegenhaltungen:
- EP-A- 0 369 364
- EP-A- 0 448 000
- EP-A- 0 490 435
- EP-A- 0 844 224
- DE-A- 2 405 909
- US-A- 4 025 572

## Beschreibung

Die Erfindung betrifft die Verwendung von Katalysatoren auf der Basis von kristallinen Alumosilicaten vom Pentasiltyp bei der Umwandlung von Methanol zu Propylen.

Katalysatoren auf der Basis von kristallinen Alumosilicaten, die aus einer Aluminiumquelle, einer Siliciumquelle, einer Alkaliquelle, einem Templat (z.B. einer Tetrapropylammonium-Verbindung) und Wasser hergestellt werden, sind aus der US-PS 37 02 886 bekannt.

Aus der DE-A-28 22 725 ist die Herstellung von Methanolumwandlungskatalysatoren auf der Basis von kristallinen Alumosilicaten bekannt. Der Durchmesser der Primärkristallite liegt bei 1 µm und mehr. Bezweckt wird die Herstellung von Primärkristalliten mit Durchmessern von weit über 1 µm. Dazu muss das Kristallwachstum durch höhere Temperaturen gefördert und die Keimbildung durch geringe Konzentrationen der für die Kristallisation der Zeolithe wesentlichen Template gehemmt werden. Außerdem finden sich keine Hinweise auf die Verwendung von Bindemitteln sowie über die Größe der Agglomerate.

Nach der DE-A-24 05 909 (FR-A-2 217 408) werden Katalysatoren zur Kohlenwasserstoffumwandlung auf der Basis von Zeolithen von ZSM-5-Typ hergestellt, wobei die mittleren Durchmesser der Primärkristallite im Bereich von 0,005 bis 0,1 µm liegen. Aus den Primärkristalliten werden Agglomerate in der Größenordnung von 0,1 bis 1 µm hergestellt. Zur Herstellung der Katalysatoren werden die Agglomerate u.a. mit Aluminiumoxid als Bindemittel versetzt, wobei aber auch andere Bindemittel als gleichwertig angegeben sind. Über die Teilchengröße der Bindemittel finden sich keine Angaben. Weiterhin wurde die Synthese in Anwesenheit von Schwefelsäure und unter Verwendung von Al₂(SO₄)₃ · xH₂O durchgeführt.

Nach der DE-A-29 35 123 werden ZSM-5- oder ZSM-11-Zeolithe unter Verwendung von Ammoniumhydroxid und einem Alkohol als Templat hergestellt, wobei das Vorhandensein von Keimen kennzeichnend ist. Die Zeolithe werden als Crack- und Hydrocrack-Katalysatoren sowie als Katalysatoren für die Isomerisierung und das Entwachsen verwendet. Als Bindemittel kann Aluminiumoxid verwendet werden. Es finden sich jedoch keine Angaben über die Größe der Primärkristallite sowie der Agglomerate und des Bindemittels.

Ein Verfahren zur Herstellung von Zeolithen und ihre Verwendung als Katalysatoren für die Umwandlung von aliphatischen Verbindungen in aromatische Kohlenwasserstoffe ist in der DE-A- 29 13 552 beschrieben. Als Templat wird ein Gemisch aus Butanol und Ammoniumhydroxid verwendet. Die Größe der Primärkristallite soll weniger als 3 µm, vorzugsweise weniger als 2 µm betragen. Eine Untergrenze ist nicht angegeben. Als Bindemittel für die Agglomerate kann u.a. Aluminiumoxid verwendet werden, wobei aber keine Teilchengrößen für die Agglomerate und das Bindemittel angegeben sind.

Aus der DE-A-35 37 459 ist ein Verfahren zur Herstellung großer, ebenmäßig ausgebildeter Kristalle von Zeolithen des Pentasil-Typs aus SiO₂ und einer Verbindung eines oder mehrerer dreiwertiger Elemente, wie Al, B, Fe, Ga, Cr in aminhaltigen Lösungen bekannt, das dadurch gekennzeichnet ist, dass man als SiO₂-haltigen Ausgangsstoff hochdisperses SiO₂, das durch Verbrennung einer Siliciumchlorid-Verbindung hergestellt wurde, verwendet. Die Zeolithe werden für die Umwandlung organischer Verbindungen, insbesondere für die Umwandlung von Methanol zu Kohlenwasserstoffen, die niedere Olefine und Aromaten enthalten, verwendet. Die erhaltenen Zeolithe sind nicht zu Agglomeraten verwachsen.

Die EP-A-173 901 betrifft ein Verfahren zur Herstellung von kleinen Zeolith-Kristalliten vom ZSM-5-Typ mit einem Si0₂/Al₂0₃-Molverhältnis von mehr als 5, entsprechend einem Si/Al-Atomverhältnis von mehr als 2,5. Die kleinste Abmessung der Kristallite liegt unterhalb 0,3 µm. Die Kristallite werden einer Ionenaustauschreaktion unterzogen und nach dem Vermischen mit einem Matrixmaterial zu größeren Teilchen geformt. Diese werden getrocknet und calciniert, wobei Katalysatoren für verschiedene Kohlenwasserstoff-Umwandlungsreaktionen erhalten werden. Über die Art und die Wirkung des Matrixmaterials finden sich keine Angaben.

Die EP-A-123 449 beschreibt ein Verfahren zur Umwandlung von Alkohol bzw. Ethern in Olefine unter Verwendung von mit Dampf behandelten Zeolith-Katalysatoren; diese haben eine Kristallgröße von weniger als 1 µm und können in eine Matrix eingebaut werden. Als Matrixmaterialien sind Tone, Kieselsäure und/oder Metalloxide angegeben.

Die US-A-4 206 085 betrifft Kohlenwasserstoff-Konvertierungs-Katalysatoren auf der Basis von Zeolithen und einem Matrixmaterial zur Erhöhung der Abriebfestigkeit. Als Matrixmaterial wird Aluminiumoxid aus Pseudoboehmit und SiO₂ aus Ammoniumpolysilicat oder Kieselsäuresol verwendet. Der bevorzugte Zeolith gehört dem Faujasit-Typ an. Über die Größe der Zeolithkristalle finden sich keine Angaben.

Die US-A-4 025 572 betrifft ein Verfahren zur Herstellung bestimmter Kohlenwasserstoffgemische, wobei das Katalysatorbett u.a. einen Zeolith enthält. Die Synthese des Zeolithen wird in Anwesenheit von Schwefelsäure und unter Verwendung von Al₂(SO₄)₃ · xH₂0 durchgeführt. Nach einem Beispiel wird der Zeolithkatalysator mit 90 Gew.-% Aluminiumoxid gemischt und pelletiert.

Die EP 0 369 364 A1 betrifft Katalysatoren auf der Basis von kristallinen Alumosilicaten vom Pentasiltyp mit einem Si/Al-Atomverhältnis von mindestens 10, die aus Primärkristalliten mit einem mittleren Durchmesser von mindestens 0,1 µm und höchstens 0,9 µm aufgebaut sind. Die Größe der Primärkristallite wird als wichtig für die Lebensdauer der Katalysatoren angesehen. Gleiches gilt für die EP 0 448 000 A1. Als Anwendungsbeispiele werden ein Methanol-zu-Olefin-Verfahren und ein Olefin-zu-Diesel-Verfahren angegeben.

Der Erfindung liegt demgegenüber die Aufgabe zugrunde, Katalysatoren auf der Basis von kristallinen hochaktiven Alumosilicaten bereitzustellen, die bei katalytischen Prozessen, insbesondere bei CMO (Conversion of Methanol to Olefin)-Verfahren bzw. Methanol-zu-Propylen-(MTP-)Umwandlungsprozessen eine erhöhte Aktivität und Selektivität bei sehr guter Lebensdauer aufweisen.

Diese Aufgabe wird durch den Erfindungsgegenstand gemäß Anspruch 1 gelöst.

Dabei wurde überraschend gefunden, dass gerade bei einer mittleren Teilchengröße der Primärkristallite des kristallinen Alumosilicats im Bereich zwischen etwa 0,01 und weniger als 0,1 µm und Einhaltung der anderen Merkmale gemäß Anspruch 1 sowohl eine hervorragende Lebensdauer als auch eine hervorragende Selektivität und Aktivität der erfindungsgemäßen Katalysatoren resultiert.

Wenn die Primärkristallite teilweise zu Agglomeraten vereinigt sind, so sind sie nur locker aneinander gebunden, wie zum Beispiel in Filterkuchen. Aus diesem können die Primärkristallite verhältnismäßig leicht, z.B. durch Dispergieren des Filterkuchens in einem wässrigen Medium und durch Rühren der Dispersion, wiedererhalten werden.
Es ist wichtig, dass die Primärkristallite einen mittleren Durchmesser von mindestens 0,01 µm und weniger als 0,1 µm haben. Vorzugsweise liegt der mittlere Durchmesser der Primärkristallite im Bereich von 0,01 bis 0,06 µm. Besonders gute Resultate werden erhalten, wenn der mittlere Durchmesser der Primärkristallite im Bereich von 0,015 bis 0,05 µm liegt. Wenn der mittlere Durchmesser kleiner als 0,01 µm ist, vermindert sich sowohl die Aktivität als auch die Lebensdauer der Katalysatoren beträchtlich. Der mittlere Durchmesser der Primärkristallite wird definiert als das über eine Vielzahl von Kristalliten gemittelte arithmetische Mittel zwischen dem größten und dem kleinsten Durchmesser eines einzelnen Kristalliten, bestimmt anhand von rasterelektronenmikroskopischen Untersuchungen bei einer Vergrößerung von 80.000 (siehe unten). Diese Definition hat ihre Bedeutung bei Kristalliten mit einem unregelmäßigen Kristallhabitus, z.B. bei stäbchenförmigen Kristalliten. Bei kugelförmigen bzw. annähernd kugelförmigen Kristalliten fallen der größte und der kleinste Durchmesser zusammen.

Bei den angegebenen Werten für die Primärkristallite handelt es sich um die mittleren Abmessungen (arithmetisches Mittel aus der größten und der kleinsten Abmessung, gemittelt über eine Vielzahl von Kristalliten). Diese Werte werden mit einem LEO Field Emission Scanning Electron Microscope (LEO Electron Microscopy Inc., USA) anhand von Pulverproben des Katalysators bestimmt, die zuvor in Aceton redispergiert, 30 Sekunden Ultraschallbehandelt und anschließend auf einen Träger aufgebracht worden waren (Probe Current Range: 4 pA bis 10 nA). Die Messung erfolgt bei 80.000-facher Vergrößerung. Die Werte konnten bei 253.000-facher Vergrößerung bestätigt werden.

Die Primärkristallite bzw. die Agglomerate sind durch feinteiliges Aluminiumoxid, das vorzugsweise durch Hydrolyse von aluminiumorganischen Verbindungen erhältlich ist, miteinander verbunden.

Die Verbundkörper haben im allgemeinen Abmessungen von 20 bis 1000 µm, insbesondere von 50 bis 800 µm. Auch bei diesen Werten handelt es sich um mittlere Abmessungen, die wie vorstehend angegeben, definiert sind.

Es wurde überraschend gefunden, dass bei Einhaltung der vorstehend definierten Primärkristallitgröße besonders gute Katalysatoren gemäß Anspruch 1 erhalten werden, wenn das feinteilige Aluminiumoxid-Bindemittel im Reaktionsansatz als peptisierbares Aluminiumoxidhydrat vorliegt und die Menge des Aluminiumoxid-Bindemittels, bezogen auf das Gesamtgewicht des Endproduktes (Katalysators) mindestens 10 Gew.-% beträgt und etwa 40 Gew.-% nicht übersteigt.

Vorzugsweise sind mindestens 95 % der Teilchen des peptisierbaren Aluminiumoxidhydrats, (auf den mittleren Durchmesser bezogen), ≤ 55 µm. Das feinteilige Aluminiumoxid-Bindemittel ist vorzugsweise durch Hydrolyse von Aluminiumtrialkylen oder Aluminiumalkoholaten erhältlich.

Der Aufbau des Katalysators aus Primärkristalliten, Agglomeraten und Bindemittelteilchen bestimmt auch die BET-Oberfläche, bestimmt nach DIN 66131 (300 bis 600 m²/g), das Porenvolumen, bestimmt nach der Quecksilberporosimetrie-Methode gemäß DIN 66 133 (0,3 bis 0,8 cm³/g) sowie den Porendurchmesser, d.h. mindestens 10 %, vorzugsweise mindestens 20 %, und insbesondere mindestens 60 % der Poren haben vorzugsweise einen Durchmesser von 14 bis 80 nm.

Die BET-Oberfläche, das Porenvolumen und der Porendurchmesser stellen eine optimale Auswahl dar, um Katalysatoren mit hoher Aktivität, Selektivität und Lebensdauer zu erhalten.

Der erfindungsgemäß verwendete Katalysator ist vorzugsweise **dadurch gekennzeichnet, dass** er auf folgende Weise erhältlich ist:
(a) in einem wässrigen Reaktionsansatz, enthaltend eine Siliciumquelle, eine Aluminiumquelle, eine Alkaliquelle und ein Templat, wird bei erhöhter Temperatur und gegebenenfalls bei erhöhtem Druck in an sich bekannter Weise ein alkalisches Alumosilicatgel erzeugt und in ein kristallines Alumosilicat umgewandelt, wobei aber die Reaktion abgebrochen wird, wenn die erhaltenen Primärkristallite einen mittleren Durchmesser von mindestens 0,01 µm, jedoch weniger als 0,1 µm, vorzugsweise von 0,01 bis 0,06 µm, insbesondere von 0,015 bis 0,05 µm haben;
(b) die Primärkristallite werden aus dem wässrigen Reaktionsmedium als Voragglomerate abgetrennt, getrocknet und einer Zwischencalcinierung unterzogen;
(c) das Produkt von Stufe (b) wird zum Austausch der Alkaliionen in wässrigem Medium mit einer protonenhaltigen oder beim Erhitzen Protonen liefernden Substanz umgesetzt, abgetrennt, getrocknet, und erneut einer Zwischencalcinierung unterzogen, worauf eine Agglomeratfraktion von etwa 5 bis 500 µm abgetrennt wird;
(d) die Agglomeratfraktion von Stufe (c) wird mit dem feinteiligen Aluminiumoxidhydrat vermischt;
(e) das Produkt von Stufe (d) wird einer Abschlusscalcinierung unterzogen.

Die Bedeutung der einzelnen Stufen, nach denen der erfindungsgemäß verwendete Katalysator erhältlich ist, ist nachstehend näher erläutert:

In der Stufe (a) wird zunächst ein wässriger Reaktionsansatz, enthaltend eine Siliciumquelle (beispielsweise kolloidale Kieselsäure oder ein Alkalisilicat), eine Alkali- und eine Aluminiumquelle (Alkalialuminat, insbesondere Natriumaluminat) und ein Templat, hergestellt.

Es wurde überraschend gefunden, dass sich bei Verwendung eines Alkalialuminats, insbesondere von Natriumaluminat, als Alkali- und Aluminiumquelle besonders vorteilhafte Katalysatoren, insbesondere für CMO- bzw. MTP-Verfahren erzeugen lassen. Erfindungsgemäß erfolgt dabei in der Stufe a) (Primärsynthese des kristallinen Alumosilicats) keine (gesonderte) Säurezugabe. Insbesondere werden im Vergleich zu bekannten Verfahren keine Mineralsäuren wie Schwefelsäure im Reaktionsansatz bei der Primärsynthese verwendet. Dabei werden sowohl die beim Umgang mit (starken) Säuren entstehenden Probleme vermieden, als auch vorteilhafte Katalysatoren erhalten.

Falls der Katalysator nach einer besonders bevorzugten erfindungsgemäßen Ausführungsform in einem CMO- bzw. MTP-Verfahren verwendet werden soll, insbesondere einem Verfahren gemäß der DE 100 27 159 A1, deren diesbezügliche Offenbarung hiermit in die Beschreibung aufgenommen wird, werden die Gewichtsanteile zwischen Siliciumquelle und Aluminiumquelle so gewählt, dass kristalline Alumosilicate mit einem Si/Al-Atomverhältnis zwischen etwa 50 und 250, vorzugsweise etwa 50 und 150, insbesondere etwa 75 bis 120 erhalten werden.

Aus dem Reaktionsansatz wird bei erhöhter Temperatur und gegebenenfalls bei erhöhtem Druck in an sich bekannter Weise ein alkalisches Alumosilicatgel erzeugt. Man kann schon bei Temperaturen ab 90°C arbeiten, doch werden in diesem Fall die Reaktionszeiten verhältnismäßig lang (etwa 1 Woche). Es wird deshalb vorzugsweise bei Temperaturen von 90 bis 190°C, insbesondere von 90 bis 150°C gearbeitet, wobei sich bei Temperaturen von mehr als 100°C (unter Normalbedingungen) in Abhängigkeit von der Temperatur automatisch ein Überdruck einstellt.

Das Alumosilicatgel wandelt sich im Laufe der Reaktion in ein kristallines Alumosilicat um. Wenn die Temperatur des Reaktionsansatzes höher als 190°C liegt, wird das Wachstum der Alumosilicat-Primärkristallite zu schnell und es werden leicht zu große Primärkristallite erhalten, während gleichzeitig noch Alumosilicatgel im Reaktionsansatz vorhanden ist.

Als Template werden Tetraalkylammoniumverbindungen, vorzugsweise Tetrapropylammoniumhydroxid (TPAOH) oder Tetrapropylammoniumbromid (TPABr) eingesetzt. Man kann als Template auch Gemische aus Ammoniak oder einem organischen Amin und einer weiteren organischen Verbindung aus der Gruppe der Alkohole, vorzugsweise Butanol, verwenden.

Der wässrige Reaktionsansatz von Stufe (a) hat vorzugsweise einen pH-Wert von 10 bis 13. Bei einem pH-Wert von weniger als 10 verläuft die Umwandlung des Alumosilicatgels in das kristalline Alumosilicat verhältnismäßig langsam. Bei höheren pH-Werten als 13 können sich die Alumosilicatkristalle in einigen Fällen wieder auflösen.

Die Bildung der kristallinen Alumosilicat-Primärkristallite kann durch geeignete Auswahl der Siliciumquelle, der Aluminiumquelle, der Alkaliquelle und des Templats sowie durch geeignete Auswahl der Temperatur und des pH-Werts und der Rührgeschwindigkeit geregelt werden. Wesentlich ist, dass die Reaktion abgebrochen wird, wenn die erhaltenen Primärkristallite einen mittleren Durchmesser von mindestens 0,01 µm und weniger als 0,1 µm haben, vorzugsweise im Bereich von 0,01 bis 0,06 µm, insbesondere von 0,015 bis 0,05 µm haben.

Zu diesem Zweck werden mehrere Testansätze durchgeführt. Schon nach wenigen Versuchen lassen sich die optimalen Parameter ermitteln, aufgrund derer die erforderlichen Größenbereiche der Primärkristallite erreicht werden. Ein Indiz für die Beendigung der Reaktion besteht auch darin, dass der pH-Wert des Reaktionsansatzes sprunghaft ansteigt.

Erfindungsgemäß braucht nicht in jedem Fall ein neuer Reaktionsansatz hergestellt zu werden. Vielmehr kann zur Erzeugung des Alumosilicatgels die Siliciumquelle, die Alkaliquelle, die Aluminiumquelle, das Templat und das Wasser aus den. Mutterlaugen vorheriger Synthesen verwendet und durch die für die Synthese des Alumosilicatgels erforderlichen Mengen der genannten Verbindungen ergänzt werden.

Die Bildung der Alumosilicat-Primärkristallite von Stufe (a) erfolgt vorzugsweise bei einem pH-Wert zwischen 10 und 13, wobei der Reaktionsansatz gerührt wird. Auf diese Weise wird die Größenverteilung der Primärkristallite homogenisiert. Die Rührgeschwindigkeit soll aber vorzugsweise nicht mehr als 900 U/min betragen. Bei größeren Rührgeschwindigkeiten ist der Anteil der kleineren Primärkristallite höher, was gegebenenfalls vorteilhaft ist, solange gewährleistet ist, dass der mittlere Durchmesser aller Primärkristallite mindestens 0,01 µm beträgt.

In der Stufe (b) werden die Primärkristallite aus dem wässrigen Reaktionsmedium als Voragglomerate abgetrennt, d.h. nicht als Einzelkristallite. Dies wird vorzugsweise dadurch erreicht, dass man dem wässrigen Reaktionsmedium ein Flockungsmittel zusetzt. Im allgemeinen wird als Flockungsmittel eine kationische organische makromolekulare Verbindung verwendet.

Das Flockungsmittel erleichtert nicht nur die Abtrennung der Primärkristallite aus dem Reaktionsmedium (verbesserte Filtrierbarkeit), sondern bewirkt auch, dass sich die Primärkristallite zu Voragglomeraten zusammenschließen, die hinsichtlich Größe, Struktur und Anlagerung der Primärkristallite schon weitgehend den in der folgenden Stufe gebildeten Agglomeraten gleichen. Die Voragglomerate werden getrocknet und einer Zwischencalcinierung unterzogen, die zunächst vorzugsweise in einer inerten Atmosphäre bei etwa 200 bis 350°C, insbesondere bei etwa 250°C durchgeführt wird, wobei ein Teil des Templats desorbiert wird.

Die Zwischencalcinierung kann dann in einer oxidierenden Atmosphäre bei etwa 500 bis 600°C vervollständigt werden, wobei die gegebenenfalls noch vorhandene Restmenge an Templat abgebrannt wird.

Im allgemeinen werden die Voragglomerate etwa 1 bis 20 Stunden in der inerten Atmosphäre und etwa 1 bis 30 Stunden in der oxidierenden Atmosphäre zwischencalciniert.

In der Stufe (c) wird das Produkt von Stufe (b) zum Austausch der Alkaliionen in wässrigem Medium mit einer protonenhaltigen oder beim Erhitzen Protonen liefernden Substanz umgesetzt. Beispielsweise kann der Ionenaustausch mit Hilfe einer verdünnten Mineralsäure (z.B. Salzsäure oder Schwefelsäure) oder einer organischen Säure (z.B. Essigsäure) durchgeführt werden. Der Ionenaustausch erfolgt vorzugsweise unter Rühren mindestens eine Stunde bei Temperaturen zwischen 25 und 100°C, wobei zumindest ein Teil der Alkaliionen in den Voragglomeraten der Primärkristallite durch Wasserstoffionen ausgetauscht werden. Falls erforderlich, kann der Ionenaustausch unter den gleichen Bedingungen wiederholt werden.

Nach dem Austausch der Alkaliionen im wässrigen Medium wird das Protonen enthaltende Produkt (H-Zeolith) abgetrennt (beispielsweise durch Filtration), getrocknet und erneut einer Zwischencalcinierung unterzogen. Die Zwischencalcinierung wird bei Temperaturen von 400 bis 800°C, vorzugsweise bei etwa 600°C über einen Zeitraum von 5 bis 20 Stunden durchgeführt.

Statt mit der verdünnten Säure kann der Ionenaustausch auch mit Hilfe einer Ammoniumsalzlösung unter vergleichbaren Bedingungen durchgeführt werden. In diesem Fall werden die Alkaliionen durch Ammoniumionen .ausgetauscht. Wird das so erhaltene Produkt zwischencalciniert, so wird Ammoniak entfernt, und man erhält ein Protonen enthaltendes Produkt.

Das nach der Zwischencalcinierung erhaltene Produkt enthält einerseits Agglomerate, die ≥ 500 µm sind, und andererseits Staubanteile, die ≤ 5 µm sind. Es wird daher eine Agglomeratfraktion von etwa 5 bis 500 µm abgetrennt.

Diese Agglomeratfraktion wird in der Stufe (d) mit dem feinteiligen Aluminiumoxidhydrat vermischt, von dem vorzugsweise mindestens 95 % ≤ 55 µm und mindestens 30 % ≥ 35 µm sind. Diese Werte sind, gemittelt über eine Vielzahl von Kristalliten, jeweils auf den mittleren Durchmesser bezogen, der wie der mittlere Durchmesser der Primärkristallite definiert ist. Im einzelnen hat das Aluminiumoxid typischerweise folgendes Kornspektrum.
99 % ≤90 µm
95 % ≤ 45 µm
55 % ≤ 25 µm.

Das Aluminiumoxidhydrat ist im wesentlichen für die Einstellung des Porenvolumens des erfindungsgemäßen Katalysators verantwortlich. Erfindungsgemäß beträgt die Menge des feinteiligen Aluminiumoxidhydrat-Bindemittel etwa 10 bis 40 Gew.-%, bezogen auf das Gesamtgewicht des Produktes (der Mischung) von Stufe (d).

Vorzugsweise ist das feinteilige Aluminiumoxidhydrat-Bindemittel peptisierbares Aluminiumoxid, das besonders Na- und Fe-arm ist.

Es wurde überraschend gefunden, dass es zu einer signifikanten Verbesserung der katalytischen Eigenschaften der erfindungsgemäßen Katalysatoren kommt, wenn zur Peptisierung des Aluminium oxidhydrats eine Säurekonzentration von 0,15 bis 2,5 mol H⁺/mol Al₂O₃, vorzugsweise von 0,20 bis 1,5 mol H⁺/mol Al₂O₃ und insbesondere von 0,4 bis 1,0 mol H⁺/mol Al₂O₃ eingestellt wird.

Die Peptisierung kann prinzipiell mit organischen oder anorganischen Säuren in einem Konzentrationsbereich der Säure von 0,1% bis 100% durchgeführt werden. Beispielsweise können organische Säuren wie 100%ige Essigsäure oder verdünnte anorganische Säuren wie 52%ige Salpetersäure etc verwendet werden.

Das Produkt von Stufe (d) wird einer Abschlusscalcinierung unterzogen. Diese kann allgemein bei Temperaturen zwischen etwa 500° und 850°C für 1 bis 12 Stunden durchgeführt werden. Es wurde jedoch im Rahmen der vorliegenden Erfindung auch überraschend gefunden, dass die Abschlusskalzinierung besonders vorteilhaft bei einer Temperatur von 660 bis 850°C für weniger als 5 Stunden, insbesondere von 680°C bis 800°C für 1 bis 4 Stunden durchgeführt wird. Durch diese verhältnismäßig kurze Abschlusskalzinierung bei hohen Temperaturen lässt sich offenbar die Azidität der sauren Zentren des Katalysators vorteilhaft beeinflussen und zugleich die Stabilität des erfindungsgemäßen Katalysators erhöhen. Es wurde auch gefunden, dass diese vorteilhafte "verschäfte" Abschlusskalzinierung auch bei anderen Alumosilicatkatalysatoren bei Verwendung anderer (beliebiger) Aluminium-, Alkali und Siliciumquellen ,beliebiger Template sowie nicht erfindungsgemäßer Bindemittel positive Effekte auf die katalytischen Eigenschaften des Katalysators auf Alumosilicatbasis zeigt.

Das so erhaltenen Endprodukt kann, wie vorstehend erwähnt, besonders vorteilhaft in CMO- bzw. MTP-Verfahren eingesetzt werden. Prinzipiell ist jedoch auch die Verwendung in anderen Kohlenstoff-Umwandlungsreaktionen, wie insbesondere Olefin-zu-Diesel-(COD-)Verfahren, Dewaxing-Verfahren, Alkylierungen, der Umwandlung von Paraffin zu aromatischen Verbindungen (CPA) sowie verwandten Reaktionen nicht ausgeschlossen.

Die Erfindung ist durch die nachstehenden nichtbeschränkenden Beispiele näher erläutert.

### Vergleichsbeispiel 1

Es wurde ein Katalysator gemäß Beispiel 1 der EP 0 369 364 B1 mit einem mittleren Durchmesser der Primärkristallite von etwa 0,3 µm hergestellt (Si/Al-Verhältnis 105). Das dort angegebene Verfahren und die physikalischen und chemischen Eigenschaften des Produktes werden durch Bezugnahme ausdrücklich in die vorliegende Beschreibung aufgenommen.

So wurden nach diesem Vergleichsbeispiel Alumosilikat-Zeolithe mit einer Primärkristallitgröße von < 1 µm hergestellt. Die Katalysatoren wurden unter Zusatz von Aluminiumoxid als Bindemittel hergestellt. Im einzelnen wurde wie folgt verfahren:
Eine Reaktionsmischung wurde durch inniges Mischen zweier Lösungen bei Raumtemperatur in einem 40 Liter-Autoklaven hergestellt. Die beiden Lösungen wurden als Lösung A und Lösung B bezeichnet. Die Lösung A wurde hergestellt, indem in 11 kg deionisiertem Wasser 2218 g TPABr gelöst wurden. In diese Lösung wurden 5000 g einer hadelsüblichen Kieselsäure eingetragen. Die Lösung B wurde hergestellt, indem in 5,5 Liter deionisiertem Wasser 766 g NaOH und anschließend 45,6 g NaAlO₂ gelöst wurden. Die noch warme Lösung B wurde zur Lösung A gegeben. Der Autoklav wurde dann geschlossen und unter Rühren bei etwa 60 U/min. sofort auf die Reaktionstemperatur gebracht. Nach etwa 50 Stunden war die Reaktion beendet, wie aus dem pH-Sprung zu ersehen war. Nach dem Abkühlen wurde der Autoklav geöffnet, das Produkt dem Reaktionskessel entnommen und filtriert. Der Filterkuchen wurde in etwa 40 Liter deionisiertem Wasser aufgeschlämmt, mit etwa 5 Liter einer 0,4 Gew.-%igen wässrigen Suspension eines handelsüblichen Flockungsmittels versetzt und nach dem Rühren und Absetzen der Voragglomerate des Feststoffes dekantiert. Der beschriebene Waschprozess wurde wiederholt, bis das Waschwasser einen pH-Wert von 7 bis 8 und eine Br-Konzentration von weniger als 1 ppm hatte. Die Aufschlämmung, in der Voragglomerate von Primärkristalliten zu erkennen waren, die offenbar durch das Flockungsmittel zusammengehalten wurden, wurde filtriert. Der Filterkuchen wurde anschließend bei 120°C 12 Stunden getrocknet.

Der getrocknete Filterkuchen wurde mit einem handelsüblichen Granulator auf eine Korngröße von 2 mm zerkleinert.

Das Granulat wurde mit einer Aufheizrate von 1°C/min unter Stickstoff (1000 Nl/h) auf 350°C gebracht und bei 350°C 15 Stunden unter Stickstoff (1000 Nl/h) calciniert. Dann wurde die Temperatur mit einer Aufheizrate von 1°C/min auf 540°C erhöht, und das Granulat wurde 24 Stunden bei dieser Temperatur an Luft calciniert, um das restliche TPABr abzubrennen.

Der calcinierte Na-Zeolith wurde in der 5-fachen Menge einer 1-molaren wässrigen HCl-Lösung suspendiert und auf 80°C gebracht. Bei dieser Temperatur wurde eine Stunde gerührt. Dann wurde etwa 1 Liter einer 0,4 Gew.-%igen Suspension des Flockungsmittels hinzugegeben, und die überstehende Säure wurde nach Absitzen des Feststoffes abdekantiert. Der so beschriebene Vorgang wurde noch einmal wiederholt.

Der Feststoff wurde in etwa 10 Waschvorgängen jeweils in 60 Liter deionisiertem Wasser unter Rühren suspendiert und mit durchschnittlich 100 ml einer 0,4 Gew.-%igen Suspension des Flockungsmittels versetzt. Nach dem Absitzen des Zeolithen wurde die überstehende Lösung dekantiert. Als der Gehalt an Cl⁻ im Waschwasser < 5 ppm war, wurde die Suspension abfiltriert und bei 120°C 15 Stunden getrocknet.

Der getrocknete H-Zeolith wurde mit einem handelsüblichen Granulator auf 2 mm zerkleinert und unter Luft mit einer Aufheizrate von 1 °C/min auf 540°C gebracht und bei dieser Temperatur unter Luft 10 Stunden calciniert.

5000 g eines calcinierten H-Zeolithen wurden mit Hilfe einer Labormühle auf eine Korngröße von etwa 500 µm gemahlen und in einem Doppel-Z-Kneter mit 1470 g eines handelsüblichen peptisierbaren Aluminiumoxidhydrats mit einem Korngrößenspektrum von 98 Gew.-% ≤ 90 µm; 95 Gew.-% ≤ 45 µm und 55 Gew.-% ≤ 25 µm 15 min trocken gemischt. Zu dieser Mischung wurden langsam 4565 ml einer 1,5 Gew.-%igen wässrigen Essigsäurelösung (zur Peptisierung des Aluminiumoxidhydrats) und 417 ml Steatitöl gegeben.

Diese Mischung wurde etwa 30 min bis zur Plastifizierung geknetet und in einem handelsüblichen Extruder zu Formkörpern mit einem Durchmesser von etwa 1,5 mm und einer Länge von etwa 3 mm extrudiert. Die Abschlusscalcinierung wurde 3 Stunden bei 650°C durchgeführt.

Die Analysenwerte sowie die physikalischen und chemischen Eigenschaften des Produkts sind in Tabelle I angegeben.

### Vergleichsbeispiel 2

Es wurde ein Katalysator gemäß Beispiel 4 der DE-A-24 05 909 hergestellt, wobei jedoch keine Behandlung mit Nickelnitrat, d.h. kein Ni-Austausch erfolgte. Das in der DE-A-24 05 909 zu Beispiel 4 angegebene Herstellungsverfahren und die physikalischen und chemischen Eigenschaften des Produktes werden durch Bezugnahme ausdrücklich in die vorliegende Beschreibung aufgenommen.

### Beispiel 1

Es wurde ein Katalysator wie in Vergleichsbeispiel 1 beschrieben hergestellt, wobei die Umsetzung abgebrochen wurde, sobald der mittlere Teilchendurchmesser der Primärkristallite bei 0,03 µm lag. Auch die Calcinierung und der Ionenaustausch erfolgte gemäß Vergleichsbeispiel 1.

### Beispiel 2

Es wurde ein Katalysator wie in Beispiel 1 beschrieben hergestellt, wobei das Verhältnis von SiO₂ und NaAlO₂ bei gleichbleibender Gesamtmolarität dieser Verbindungen im Ansatz so variiert wurde, dass das Si/Al-Verhältnis des Katalysators bei 31 lag. Die Umsetzung der Reaktionsmischung wurde abgebrochen, sobald der mittlere Primärkristallitdurchmesser bei 0,03 µm lag.

Die physikalischen und chemischen Eigenschaften der Katalysatoren des Vergleichsbeispiels 1 sowie der Beispiele 1 und 2 sind in Tabelle I zusammengefasst.

**Tabelle I**

| **Beispiel** | | **Vergleichsbeispiel 1** | **1** | **2** |
|---|---|---|---|---|
| Molverhältnis Ausgangsstoffe | | | | |
| | SiO₂ | 100 | 100 | 100 |
| | NaAlO₂ | 0,67 | 0,67 | 2,21 |
| | NaOH | 23 | 23 | 23 |
| | TPABr | 10 | 10 | 10 |
| | H₂O | 1100 | 1100 | 1100 |
| | | | | |
| Kristallisationsdaten | | | | |
| | Temperatur (°C) | 130 | 130 | 130 |
| | Zeit (h) | 50 | 23 | 29 |
| | Kristallinität (%) | 100 | 100 | 100 |
| | Primärkristallitgröße (µm) | 0,3 | 0,03 | 0,03 |
| | | | | |
| Phys. und chem. Eigenschaften des Katalysators | | | | |
| | Si/Al Atomverh. | 105 | 105 | 31 |
| | BET-Oberfläche (m²/g) | 366 | 385 | 393 |
| | Porenvolumen (cm³/g) | 0,51 | 0,46 | 0,55 |
| | Poren ≥ 80 nm (%) | 21,1 | 20,7 | 8,2 |
| | Poren 14 - 80 nm (%) | 68,0 | 69,2 | 77,3 |

### Anwendungsbeispiel

Dieses Anwendungsbeispiel zeigt anhand katalytischer Daten des CMO-Verfahrens (Conversion of Methanol to Olefins) in einem isothermen Festbettreaktor die Vorteile des erfindungsgemäßen Katalysators.

Die Versuche wurden wie im Anwendungsbeispiel 1 der EP 0 369 364 B1 durchgeführt, deren diesbezügliche Offenbarung durch Bezugnahme in die vorliegende Beschreibung aufgenommen wird. Zusammenfassend wurde das Feed Methanol/Wasser (1 g/l g) mit einer LHSV von 1 (l/(lxh), d.h. Liter Gesamtfeed pro Liter Katalysator und pro Stunde bei einem Druck von 1 bar nach Passieren eines isothermen Festbettrohrreaktors zur teilweisen Konversion von Methanol in Dimethylether über 300 cm³ CMO-Katalysator in einem isothermen Festbettrohrreaktor geleitet. Die Umwandlung des Methanols wurde bei nahezu 100% gehalten. Bei einem bestimmten Wert (Konversion EOR, %) wurde die Reaktion abgebrochen und der Katalysator regeneriert.

Gasphase und flüssige Phase am Ausgang des CMO-Katalysator-Reaktors wurden mit den üblichen gaschromatographischen Analyseverfahren bestimmt. Die Verteilung der Kohlenwasserstoffe ist in Tabelle II zusammen mit anderen relevanten Daten zusammengefasst.

**Tabelle II**

| Katalysator | | Vergleichsbeispiel 1 | Vergleichsbeispiel 2 | Beispiel 1 |
|---|---|---|---|---|
| Bindemittel Primärkristallitgröße (µm) | | Aluminiumoxid 0,3 | Aluminiumoxid 0,05 - 0,07 | Aluminiumoxid 0,03 |
| Temperatur (°C) | | 400 | 415 | 395 |
| Druck (bar) | | 1 | 1 | 1 |
| LHSV (1/lxh) | | 1 | 1 | 1 |
| MeOH/H₂O (g/g) | | 1 | 1 | 1 |
| Dauer 1. Zyklus (h) | | 927 | 548 | 1000 abgebr. |
| Dauer 2. Zyklus (h) | | 2000 abgebr. | 415 | 2000 abgebr. |
| 1. Zyklus Mittelwerte (Gew.%) | | | | |
| | C₁-C₄ Paraffine | 10,5 | 9,1 | 9,9 |
| | C₂-C₄ Olefine | 51,9 | 50,8 | 60,8 |
| | C₃ Olefin | 24,8 | 22,3 | 34,4 |
| | C₅⁺ Gasolin | 37,6 | 40,1 | 29,3 |
| Konversion EOR (%) | | 99,7 | 99,5 | 100 abgebr. |
| 2. Zyklus Mittelwerte (Gew.%) | | | | |
| | C₁-C₄ Paraffine | 7,5 | 9,8 | 9,0 |
| | C₂-C₄ Olefine | 54,8 | 48,0 | 63,8 |
| | C₃ Olefin | 26,2 | 19,9 | 36,1 |
| | C₅⁺ Gasolin | 37,7 | 42,2 | 27,2 |
| Konversion EOR (%) | | 100 abgebr. | 98,4 | 100 abgebr. |

| | | | | |
|---|---|---|---|---|
| EOR = end of run; abgebr. = abgebrochen | | | | |

Tabelle II zeigt eindeutig die verbesserte Selektivität des Katalysators gemäß Beispiel 1 bei der Erzeugung von C₂-C₄ Olefinen sowie die sehr gute Lebensdauer des erfindungsgemäßen Katalysators. Die Katalysatoren (auch der erfindungsgemäße Katalysator) wurden nach Beendigung des ersten Zyklus regeneriert, indem zunächst der MeOH-Strom abgestellt wurde. Dann wurde Stickstoff zum Verdrängen des restlichen MeOH eingespeist. Schließlich wurde dem Stickstoff langsam Sauerstoff in allmählich höher werdenden Konzentrationen zugesetzt, um den auf den Katalysatoren abgeschiedenen Kohlenwasserstoff abzubrennen. Die Temperatur der Katalysatoren wurde hierbei immer unter 480°C gehalten. Die Regenerierung der Katalysatoren war beendet, wenn der Sauerstoffgehalt des Stickstoffstromes am Eingang und am Ausgang des Katalysatorbettes der gleiche war.

Zu beachten ist ferner, dass der Katalysator nach Beispiel 1 bei 395°C höhere Konversionswerte zeigt als die Vergleichskatalysatoren, die bei höheren Temperaturen getestet wurden.

Überraschenderweise wurde weiterhin gefunden, dass die Selektivität des erfindungsgemäßen Katalysators bei der Erzeugung von C₂-C₄ Olefinen sowie dessen Lebensdauer noch signifikant gesteigert werden konnte, indem die Peptisierung des verwendeten Aluminiumoxidhydrats mit einer erhöhten Säurekonzentration von über etwa 2,0 mol H⁺/mol Al₂O₃ durchgeführt wurde. Weiterhin ließen sich die vorstehenden Eigenschaften der erfindungsgemäßen Katalysatoren durch eine verkürzte und bei höheren Temperaturen durchgeführte Abschlusskalzinierung (z.B. 700°C für 3 Stunden) weiter verbessern.

Beim Einsatz weiterer Vergleichskatalysatoren, die entweder ein Si/Al-Verhältnis oder eine Primärkristallitgröße außerhalb der in Anspruch 1 angegebenen Werte aufwiesen, zeigte sich, dass die Selektivität für Propylen jeweils deutlich niedriger als beim Einsatz des Katalysators gemäß Beispiel 1 lag.

## Patentansprüche

1. Verwendung eines Katalysators auf der Basis von kristallinen Alumosilicaten vom Pentasil-Typbei der Umwandlung von Methanol zu Propylen, **dadurch gekennzeichnet, dass** der Katalysator aus Primärkristalliten mit einem mittleren Durchmesser von mindestens 0,01 µm und weniger als 0,1 µm aufgebaut ist, die zu mindestens 20 % zu Agglomeraten von 5 bis 500 µm vereinigt sind, wobei die Primärkristallite bzw. Agglomerate durch feinteiliges Aluminiumoxid, miteinander verbunden sind, dass seine BET-Oberfläche 300 bis 600 m²/g und sein Porenvolumen (nach der Quecksilberporosimetrie bestimmt) 0,3 bis 0,8 cm³/g beträgt, dass er in der H-Form vorliegt und dass die Menge des feinteiligen Aluminiumoxid-Bindemittels 10 bis 40 Gew.-%, bezogen auf das Gesamtgewicht von Alumosilicat und Bindemittel, beträgt, wobei das feinteilige Aluminiumoxid-Bindemittel im Reaktionsansatz als peptisierbares Aluminiumoxidhydrat vorliegt, wobei als Aluminium- und Alkaliquelle Natriumaluminat verwendet wird und die Primärsynthese des kristallinen Alumosilicats ohne Säurezugabe erfolgt.

2. Verwendung eines Katalysators nach Anspruch 1, **dadurch gekennzeichnet, dass** der Katalysator ein Si/Al-Atomverhältnis von etwa 50 bis 250, vorzugsweise etwa 50 und 150, insbesondere etwa 75 bis 120 aufweist.

3. Verwendung eines Katalysators nach Anspruch 1 oder 2, **dadurch gekennzeichnet, dass** der mittlere Durchmesser der Primärkristallite im Bereich von 0,01 bis 0,06 µm, insbesondere von 0,015 bis 0,05 µm liegt.

4. Verwendung eines Katalysators nach einem der vorstehenden Ansprüche, **dadurch gekennzeichnet, dass** die Abschlusskalzinierung bei einer Temperatur zwischen 500° und 850°C für 1 bis 12 Stunden, bevorzugt von 660 bis 850°C für weniger als 5 Stunden, insbesondere 680°C bis 800°C für 1 bis 4 Stunden durchgeführt wird.

5. Verwendung eines Katalysators nach einem der vorstehenden Ansprüche, **dadurch gekennzeichnet, dass** zur Peptisierung des Aluminiumoxidhydrats eine Säurekonzentration von 0,15 bis 2, 5 mol H⁺/mol Al₂O₃, vorzugsweise von 0,20 bis 1,5 mol H⁺/mol Al₂O₃ und insbesondere von 0,4 bis 1,0 mol H⁺/mol Al₂O₃ eingestellt wird.

6. Verwendung eines Katalysators nach einem der vorstehenden Ansprüche, **dadurch gekennzeichnet, dass** mindestens 10 %, vorzugsweise mindestens 20 %, insbesondere mindestens 60 % der Poren einen Durchmesser von 14 bis 80 nm besitzen.

7. Verwendung eines Katalysators nach einem der vorstehenden Ansprüche, **dadurch gekennzeichnet, dass** mindestens 95 % der Teilchen des peptisierbares Aluminiumoxidhydrats, auf den mittleren Durchmesser bezogen, ≤ 55 µm sind.

8. Verwendung eines Katalysator nach einem der vorstehenden Ansprüche, **dadurch gekennzeichnet, dass** das feinteilige Aluminiumoxid-Bindemittel durch Hydrolyse von Aluminiumtrialkylen oder Aluminiumalkoholaten erhältlich ist.

9. Verwendung eines Katalysators nach einem der vorstehenden Ansprüche, **dadurch gekennzeichnet, dass** er auf folgende Weise erhältlich ist:
(a) in einem wässrigen Reaktionsansatz, enthaltend eine Siliciumquelle, eine Aluminiumquelle, eine Alkaliquelle und ein Templat, wird bei erhöhter Temperatur und gegebenenfalls bei erhöhtem Druck in an sich bekannter Weise ein alkalisches Alumosilicatgel erzeugt und in ein kristallines Alumosilicat umgewandelt, wobei aber die Reaktion abgebrochen wird, wenn die erhaltenen Primärkristallite einen mittleren Durchmesser von mindestens 0,01 µm und weniger als 0,1 µm, vorzugsweise im Bereich von 0,01 bis 0,06 µm, insbesondere von 0,015 bis 0,05 µm haben;
(b) die Primärkristallite werden aus dem wässrigen Reaktionsmedium als Voragglomerate abgetrennt, getrocknet und einer Zwischencalcinierung unterzogen;
(c) das Produkt von Stufe (b) wird zum Austausch der Alkaliionen in wässrigem Medium mit einer protonenhaltigen oder beim Erhitzen Protonen liefernden Substanz umgesetzt, abgetrennt, getrocknet, und erneut einer Zwischencalcinierung unterzogen, worauf eine Agglomeratfraktion von etwa 5 bis 500 µm abgetrennt wird;
(d) die Agglomeratfraktion von Stufe (c) wird mit dem feinteiligen Aluminiumoxidhydrat vermischt;
(e) das Produkt von Stufe (d) wird einer Abschlusscalcinierung unterzogen.

10. Verwendung eines Katalysators nach einem der vorstehenden Ansprüche, **dadurch gekennzeichnet, dass** zur Erzeugung des Alumosilicatgels die Siliciumquelle, die Alkaliquelle, die Aluminiumquelle, das Templat und das Wasser aus den Mutterlaugen vorheriger Synthesen verwendet und durch die für die Synthese des Alumosilicatgels erforderlichen Mengen der genannten Verbindungen ergänzt werden.

11. Verwendung eines Katalysators nach einem der vorstehenden Ansprüche, **dadurch gekennzeichnet, dass** das Templat Tetrapropylammonium-hydroxid (TPAOH) oder Tetrapropylammoniumbromid (TPABr) ist.

12. Verwendung eines Katalysators nach einem der vorstehenden Ansprüche, **dadurch gekennzeichnet, dass** das Templat ein Gemisch aus Ammoniak oder einem organischen Amin und einer weiteren organischen Verbindung aus der Gruppe der Alkoholle, vorzugsweise Butanol, darstellt.

13. Verwendung eines Katalysators nach einem der vorstehenden Ansprüche, **dadurch gekennzeichnet, dass** der wässrige Reaktionsansatz von Stufe (a) einen pH-Wert von 10 bis 13 hat und die Bildung der Alumosilicat-Primärkristallite unter Rühren bei 90 bis 190°C, vorzugsweise bei 90 bis 150°C, erfolgt.

14. Verwendung eines Katalysators nach einem der vorstehenden Ansprüche, **dadurch gekennzeichnet, dass** die Rührgeschwindigkeit maximal 900 U/min beträgt.

15. Verwendung eines Katalysators nach einem der vorstehenden Ansprüche, **dadurch gekennzeichnet, dass** die Primärkristallite in Stufe (b) unter Zusatz eines Flockungsmittels aus dem wässrigen Reaktionsmedium abgetrennt werden.

16. Verwendung eines Katalysators nach einem der vorstehenden Ansprüche, **dadurch gekennzeichnet, dass** die Zwischencalcinierung in Stufe (b) in einer inerten Atmosphäre bei etwa 200 bis 350°C, vorzugsweise bei etwa 250°C und anschließend in einer oxidierenden Atmosphäre bei etwa 500 bis 600°C durchgeführt wird, um die gegebenenfalls noch vorhandene Restmenge an Templat abzubrennen.

17. Verwendung eines Katalysators nach einem der vorstehenden Ansprüche, **dadurch gekennzeichnet, dass** die Zwischencalcinierung in Stufe (c) bei 400 bis 800°C, vorzugsweise bei etwa 540°C, über einen Zeitraum von 5 bis 20 Stunden durchgeführt werden.

## Claims

1. Use of a catalyst based on crystalline aluminosilicates of the pentasil type in the conversion of methanol to propylene, **characterised in that** the catalyst is built up of primary crystallites with an average diameter of at least 0.01 µm and less than 0.1 µm, of which at least 20 % are combined to form agglomerates of 5 to 500 µm, wherein the primary crystallites or agglomerates are bonded together by finely divided aluminium oxide, **in that** its BET surface area is 300 to 600 m²/g and its pore volume (determined according to mercury porosimetry) is 0.3 to 0.8 cm³/g, **in that** it is present in H form, and **in that** the amount of finely divided aluminium oxide binder is 10 to 40 % by weight in relation to the total weight of the aluminosilicate and binder, wherein the finely divided aluminium oxide binder is present in the reaction batch as a peptisable aluminium oxide hydrate, wherein sodium aluminate is used as an aluminium and alkali source and the primary synthesis of the crystalline aluminosilicate occurs without addition of acid.

2. Use of a catalyst according to Claim 1, **characterised in that** the catalyst has an Si/Al atomic ratio of approximately 50 to 250, preferably approximately 50 to 150, in particular approximately 75 to 120.

3. Use of a catalyst according to Claim 1 or 2, **characterised in that** the average diameter of the primary crystallites lies in the range of from 0.01 to 0.06 µm, in particular from 0.015 to 0.05 µm.

4. Use of a catalyst according to any one of the preceding Claims, **characterised in that** the final calcining is carried out at a temperature of between 500° and 850°C for 1 to 12 hours, preferably of 660 to 850°C for less than 5 hours, in particular 680°C to 800°C for 1 to 4 hours.

5. Use of a catalyst according to any one of the preceding Claims, **characterised in that** an acid concentration of 0.15 to 2.5 mol H⁺/mol Al₂O₃, preferably of 0.20 to 1.5 mol H⁺/mol Al₂O₃, and in particular of 0.4 to 1.0 mol H⁺/mol Al₂O₃, is adopted for the peptisation of the aluminium oxide hydrate.

6. Use of a catalyst according to any one of the preceding Claims, **characterised in that** at least 10 %, preferably at least 20 %, in particular at least 60 %, of the pores have a diameter of 14 to 80 nm.

7. Use of a catalyst according to any one of the preceding Claims, **characterised in that** at least 95 % of the particles of the peptisable aluminium oxide hydrate are ≤ 55 µm, in relation to average diameter.

8. Use of a catalyst according to any one of the preceding Claims, **characterised in that** the finely divided aluminium oxide binder is obtained by hydrolysis of aluminium trialkylene or aluminium alcoholates.

9. Use of a catalyst according to any one of the preceding Claims, **characterised in that** is obtained in the following manner:
(a) an alkaline aluminosilicate gel is produced in a manner known per se in an aqueous reaction batch containing a silicon source, an aluminium source, an alkali source and a template at high temperature and optionally at high pressure, and is converted into a crystalline aluminosilicate, wherein, the reaction is interrupted when the primary crystallites obtained have an average diameter of at least 0.01 µm and lower than 0.1 µm, preferably in the range of from 0.01 to 0.06 µm, in particular from 0.015 to 0.05 µm;
(b) the primary crystallites are separated from the aqueous reaction medium as pre-agglomerates, dried and subjected to intermediate calcining;
(c) in order to exchange the alkali ions in the aqueous medium, the product of stage (b) is converted with a proton-containing substance, or one that yields protons when heated, is separated, dried and subjected again to intermediate calcining, whereupon an agglomerate fraction of approximately 5 to 500 µm is separated;
(d) the agglomerate fraction from stage (c) is mixed with the finely divided aluminium oxide hydrate;
(e) the product from stage (d) is subjected to final calcining.

10. Use of a catalyst according to any one of the preceding Claims, **characterised in that** the mother liquors of the previous syntheses are used to produce the aluminosilicate gel, the silicon source, the alkali source, the aluminium source, the template and the water, and these are supplemented with further amounts of the aforementioned compounds necessary for synthesis of the aluminosilicate gel.

11. Use of a catalyst according to any one of the preceding Claims, **characterised in that** the template is tetrapropyl ammonium hydroxide (TPAOH) or tetrapropyl ammonium bromide (TPABr).

12. Use of a catalyst according to any one of the preceding Claims, **characterised in that** the template represents a mixture of ammonia or an organic amine and another organic compound from the group of alcohols, preferably butanol.

13. Use of a catalyst according to any one of the preceding Claims, **characterised in that** the aqueous reaction batch from stage (a) has a pH value of from 10 to 13 and the formation of the aluminosilicate primary crystallites takes place with agitation at 90 to 190°C, preferably at 90 to 150°C.

14. Use of a catalyst according to any one of the preceding Claims, **characterised in that** the agitation speed is at most 900 rpm.

15. Use of a catalyst according to any one of the preceding Claims, **characterised in that** the primary crystallites in stage (b) are separated from the aqueous reaction medium by the addition of a flocculent.

16. Use of a catalyst according to any one of the preceding Claims, **characterised in that** intermediate calcining in step (b) is carried out in an inert atmosphere at approximately 200 to 350°C, preferably at approximately 250°C, and subsequently in an oxidising atmosphere at approximately 500 to 600°C, so as to burn off any remaining amount of template still present.

17. Use of a catalyst according to any one of the preceding Claims, **characterised in that** intermediate calcining in step (c) is carried out at 400 to 800°C, preferably at approximately 540°C, over a period from 5 to 20 hours.

## Revendications

1. Utilisation d'un catalyseur à base d'aluminosilicates cristallin de type pentasil lors de la transformation de méthanol en propylène, **caractérisée en ce que** le catalyseur est composé de cristallites primaires d'un diamètre moyen d'au moins 0,01 µm et de moins de 0,1 µm, lesquels sont regroupés pour au moins 20 % en agglomérats de 5 à 500 µm, les cristallites primaires et/ou agglomérats étant reliés les uns aux autres par de l'oxyde d'aluminium à particules fines, **en ce que** sa surface BET est de 300 à 600 m²/g et que son volume de pores (déterminé selon la porosimétrie au mercure) est de 0,3 à 0,8 cm³/g, **en ce qu'**il est présent sous la forme H et que la quantité de liant d'oxyde d'aluminium à particules fines est de 10 à 40 % en poids par rapport au poids total de silicate d'aluminium et de liant, le liant d'oxyde d'aluminium à particules fines étant présent dans la base réactionnelle sous forme d'hydrate d'oxyde d'aluminium peptisable, de l'aluminate de sodium étant utilisé comme source d'aluminium et d'alcali et la synthèse primaire de l'aluminosilicate cristallin ayant lieu sans ajout d'acide.

2. Utilisation d'un catalyseur selon la revendication 1, **caractérisée en ce que** le catalyseur présente un rapport atomique Si/Al allant d'environ de 50 à 250, de préférence allant d'environ 50 à 150, en particulier allant d'environ 75 à 120.

3. Utilisation d'un catalyseur selon la revendication 1 ou 2, **caractérisée en ce que** le diamètre moyen des cristallites primaires se situe dans la plage allant de 0,01 à 0,06 µm, en particulier allant de 0,015 à 0,05 µm.

4. Utilisation d'un catalyseur selon l'une quelconque des revendications précédentes, **caractérisée en ce que** la calcination terminale est réalisée à une température comprise entre 500° et 850° C pendant 1 à 12 heures, de préférence comprise entre 660 et 850° C pendant moins de 5 heures, en particulier comprise entre 680° C et 800° C pendant 1 à 4 heures.

5. Utilisation d'un catalyseur selon l'une quelconque des revendications précédentes, **caractérisée en ce que**, pour peptiser l'hydrate d'oxyde d'aluminium, on établit une concentration acide de 0,15 à 2,5 moles de H⁺/moles d'Al₂O₃, de préférence de 0,20 à 1,5 moles de H⁺/moles d'Al₂O₃ et en particulier de 0,4 à 1,0 mole de H⁺/mole d'Al₂O₃.

6. Utilisation d'un catalyseur selon l'une quelconque des revendications précédentes, **caractérisée en ce qu'**au moins 10 %, de préférence au moins 20 %, en particulier au moins 60 % des pores possèdent un diamètre allant de 14 à 80 nm.

7. Utilisation d'un catalyseur selon l'une quelconque des revendications précédentes, **caractérisée en ce qu'**au moins 95 % des particules de l'hydrate d'oxyde d'aluminium peptisable, si on se réfère au diamètre moyen, sont ≤ 55 µm.

8. Utilisation d'un catalyseur selon l'une quelconque des revendications précédentes, **caractérisée en ce que** le liant d'oxyde d'aluminium à particules fines peut être obtenu par hydrolyse de trialkyles d'aluminium ou d'alcoolats d'aluminium.

9. Utilisation d'un catalyseur selon l'une quelconque des revendications précédentes, **caractérisée en ce qu'**il peut être obtenu de la manière suivante :
(a) dans une base réactionnelle aqueuse contenant une source de silicium, une source d'aluminium, une source d'alcali et une matrice, on produit de manière connue en soi à température accrue et le cas échéant sous pression accrue un gel d'aluminosilicate alcalin et on le transforme en un aluminosilicate cristallin, la réaction étant toutefois interrompue lorsque les cristallites primaires obtenus ont un diamètre moyen d'au moins 0,01 µm et de moins de 0,1 µm, de préférence situé dans la plage de 0,01 à 0,06 µm, en particulier de 0,015 à 0,05 µm ;
(b) les cristallites primaires sont isolés du milieu réactionnel aqueux sous forme de pré-agglomérats, séchés et soumis à une calcination intermédiaire ;
(c) le produit de l'étape (b) est transformé dans le milieu aqueux à l'aide d'une substance contenant des protons ou produisant des protons en cas de chauffe pour permettre l'échange des ions d'alcali, isolé, séché et soumis à nouveau à une calcination intermédiaire, moyennant quoi une fraction d'agglomérat d'environ 5 à 500 µm est isolée ;
(d) la fraction d'agglomérat de l'étape (c) est mélangée à l'hydrate d'oxyde d'aluminium à particules fines ;
(e) le produit de l'étape (d) est soumis à une calcination terminale.

10. Utilisation d'un catalyseur selon l'une quelconque des revendications précédentes, **caractérisée en ce que,** pour produire le gel d'aluminosilicate, on utilise la source de silicium, la source d'alcali, la source d'aluminium, la matrice et l'eau des liqueurs mères des synthèses précédentes et on les complète par les quantités de composés cités nécessaires à la synthèse du gel d'aluminosilicate.

11. Utilisation d'un catalyseur selon l'une quelconque des revendications précédentes, **caractérisée en ce que** la matrice est de l'hydroxyde de tétrapropylammonium (TPAOH) ou du bromure de tétraprolylammonium (TPABr).

12. Utilisation d'un catalyseur selon l'une quelconque des revendications précédentes, **caractérisée en ce que** la matrice est un mélange d'ammoniac ou d'une amine organique et d'un autre composé organique du groupe des alcools, de préférence du butanol.

13. Utilisation d'un catalyseur selon l'une quelconque des revendications précédentes, **caractérisée en ce que** la base réactionnelle aqueuse de l'étape (a) a une valeur pH allant de 10 à 13, et **en ce que** la formation des cristallites primaires d'aluminosilicate a lieu lors de l'agitation à une température allant de 90 à 190° C, de préférence allant de 90 à 150° C.

14. Utilisation d'un catalyseur selon l'une quelconque des revendications précédentes, **caractérisée en ce que** la vitesse d'agitation est de 900 r/min au maximum.

15. Utilisation d'un catalyseur selon l'une quelconque des revendications précédentes, **caractérisée en ce que** les cristallites primaires sont isolés du milieu réactionnel aqueux lors de l'étape (b) en ajoutant un floculant.

16. Utilisation d'un catalyseur selon l'une quelconque des revendications précédentes, **caractérisée en ce que** la calcination intermédiaire est réalisée à l'étape (b) dans une atmosphère inerte à une température allant d'environ de 200 à 350° C, de préférence d'environ 250° C, et ensuite dans une atmosphère oxydante à une température d'environ 500 à 600° C afin d'isoler la quantité résiduelle de matrice encore éventuellement présente.

17. Utilisation d'un catalyseur selon l'une quelconque des revendications précédentes, **caractérisée en ce que** la calcination intermédiaire est réalisée à l'étape (c) à une température allant de 400 à 800° C, de préférence d'environ 540° C, pendant une durée allant de 5 à 20 heures.
